Europäisches Patentamt

European Patent Office

Office européen des brevets

(11) Publication number: **0 128 614**
A1

(12) **EUROPEAN PATENT APPLICATION**

(21) Application number: 84200770.0

(22) Date of filing: 28.05.84

(51) Int. Cl.³: **F 25 B 29/00**, F 28 D 9/00

(30) Priority: 27.05.83 NL 8301901
30.11.83 NL 8304112

(43) Date of publication of application: 19.12.84
Bulletin 84/51

(84) Designated Contracting States: AT BE CH DE FR GB IT
LI LU NL SE

(71) Applicant: FDO Technische Adviseurs B.V.,
Oostenburgermiddenstraat 62, NL-1018 MS Amsterdam
(NL)

(72) Inventor: Minkhorst, Jan Hendrik, Kemphaanstraat 46,
NL-1531 VE Wormer (NL)

(74) Representative: 't Jong, Bastiaan Jacobus et al,
OCTROOIBUREAU ARNOLD & SIEDSMA
Sweelinckplein 1, NL-2517 GK 's-Gravenhage (NL)

(54) Sorption heat pump construction.

(57) A sorption heat pump comprising a plurality of components interconnected by fluid channels, for example, an absorber, a generator, a condenser and/or an evaporator, in
which at least some components are arranged in a heat ex-
changer body (41), comprising a packet of plates (42) ar-
ranged transversely of their surface side by side. At least
the parts of the plates (42) located in the heat exchanger bo-
dy (41) are closed, between the plates (42) are arranged fil-
ling elements (43) holding the plates spaced apart and
passing a flow in the direction of length, and sealed sep-
arating elements (44) determining the ends of the components, a number of separating elements (44) having discon-
tinuities at the longitudinal edges of the plates determining
communication openings (51) adjoining the components
and on at least one of the longitudinal sides of the packet of
plates (42) determined by the longitudinal edges of the
plates connecting means (45, 46) are connected with the
communication openings (51).

Sorption heat pump construction
--------------------------------

The invention relates to a sorption heat pump comprising a plurality of components interconnected by fluid channels, for example, an absorber, a generator, a condenser and/or an evaporator, in which at least some components are arranged in a heat exchanger body comprising a packet of plates arranged transversely of their surface side by side, the components being arranged in positions in the direction of length of the plates in accordance with their operational temperatures in the body so that during operation a temperature gradient is set in the direction of length in the body and heat transport mainly takes place transverse of said direction and of the plates.

Such a heat pump is known from British Patent Application 2 076 304. In this known sorption heat pump, which is used for cooling purposes, the plates are etched to form appropriate recesses which determine the various components. For a heat pump completely integrated with the heat exchanger body there are required seven different plates, which are etched on one or on both sides and have holes and the like at different places. In dependence on the desired power a number of these sets of plates can be arranged parallel. The manufacture of the plates by etching is expensive, whilst moreover the total of passage sections per plate is limited so that the heat pump cycle in one set of plates can only have limited capacity. Consequently this construction of a heat pump is costly.

The object of the invention is to provide a heat pump of the kind set forth in the preamble which can be manufactured at relatively low cost.

In a heat pump embodying the invention this is achieved in that at least the parts of the plates located in the heat exchanger body are closed, in that between the plates are arranged filling elements holding the plates spaced apart and passing a flow in the direction of length, and sealed separating elements determining the ends of the components, a number of separating elements having discontinuities at the longitudinal edges of the plates determining communication openings adjoining the components and in that on at least one of the longitudinal sides of the packet of plates determined by the longitudinal edges of the plates connecting means are connected with the communication openings. In this way the heat exchanger body is built up as a "plate-fin" heat exchanger, whilst the connections and the communications are located at the longitudinal edges of the plates. The resultant construction can be economically manufactured on an industrial scale.

Preferably the plates, the filling elements, the separating elements and the connecting means are interconnected to form an integral unit, for example, by welding or soldering. In this way the heat exchanger body constitutes a ready block, which can be simply connected.

In a preferred embodiment of the invention the connecting means are formed by a box-shaped connecting element having sidewalls and a wall opposite the longitudinal side of the packet of plates and the connecting element in communication chambers for associated communication openings, deviding separating walls, there being provided a plurality of external connecting members connected with the communication chambers. The connecting element in this preferred embodiment may be cast. The connecting element includes all joints between the various components so that separate formation thereof is not needed.

In a further advantageous embodiment the connecting means are formed by apertured parts of the plates projecting outside the heat exchanger body and separating walls arranged between said plates, sealing the space between said parts to the outside and dividing it in communication chambers for associated communicating openings, whilst a plurality of external connection members are connected with communication chambers. The heat exchanger body and the connecting means can be integrally made in one mounting operation.

According to a further development of the invention at least one fluid buffer space can be formed in the connecting means. A sorption heat pump process requires a plurality of buffer spaces, in particular at those places where fluid and vapour are simultaneously present. By forming these fluid buffer spaces directly in the connecting elements buffers to be separately mounted are dispensed with.

In an advantageous heat pump embodying the invention at least substantially all filling elements have identical shapes. Preferably they are designed as disclosed in Dutch Patent Application 8301901 of the applicant.

The invention will be described more fully hereinafter with reference to the accompanying drawings showing embodiments of a one-stage absorption heat pump.

The invention is, however, not limited to a one-stage absorption heat pump. For example, a multi-stage heat pump using absorption or resorption can also be advantageously constructed in accordance with the invention. Within the scope of the invention the term heat pump has to be understood to mean a device in which a thermo-dynamic process can take place in which by supplying driving energy heat energy is absorbed at a given temperature and given off at a higher temperature. Known applications of heat pumps are cooling devices, heating devices and heat transformers.

Fig. 1 schematically shows a simple absorption heat pump for explaining the mode of operation thereof.

Fig. 2 schematically shows an absorption heat pump embodying the invention in which all components are accommodated in a heat exchanger body.

Fig. 3 is a schematic, perspective view of the heat pump of Fig. 2, some parts being broken away.

Fig. 4 is a fragmentary front view in the direction of the arrow IV in Fig. 3.

Fig. 5 schematically shows the arrangement of Fig. 4.

Fig. 6 is a sectional view in the direction of the arrow VI in Fig. 3.

Fig. 7 shows a detail of Fig. 3.

Fig. 8 shows a scheme corresponding to Fig. 2 of a further embodiment of a heat pump in accordance with the invention.

Figs. 9 to 11 show elevational views corresponding to Figs. 4 to 6 respectively of the heat pump of Fig. 8.

Fig. 12 is an elevational view corresponding to Fig. 2 of the heat pump of Fig. 8.

Fig. 13 is a fragmentary, perspective view with disengaged parts of a portion of the heat pump of Fig. 12.

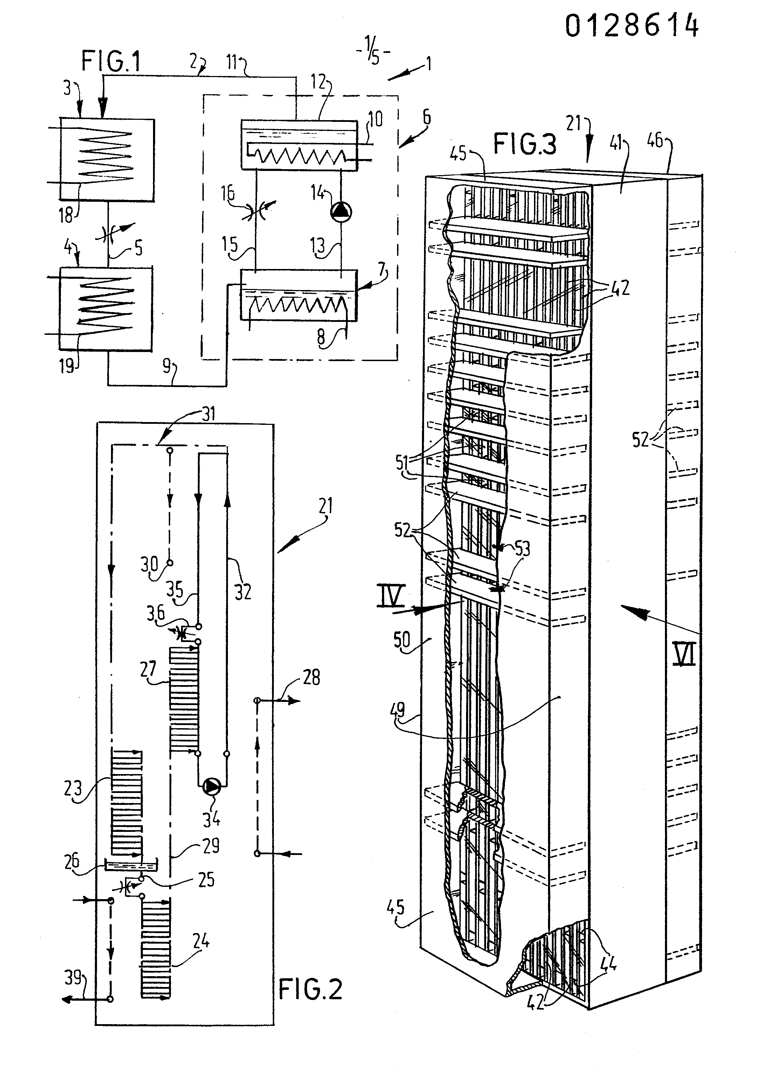

Referring to Fig. 1, the general principle of an absorption heat pump will be explained.

As stated above a heat pump generally takes up heat at a low temperature and subsequently gives it off at a higher temperature. This is achieved, for example, by evaporation of a working medium in an evaporator so that heat is absorbed. The resultant vapour-like working medium is subjected to pressure and passed to a condenser, where it condensates whilst giving off the absorbed heat. Subsequently the working medium is again supplied at a lower pressure through a restriction to the evaporator. In an absorption heat pump the vaporous working medium is subjected to a higher pressure by absorbing this vaporous working medium in an absorbent an by passing the resultant mixture by means of a pump at a higher pressure to a generator. In the generator heat is supplied so that desorption occurs and hence the vapour is released at a higher pressure.

The absorption heat pump 1 shown in Fig. 1 comprises a condenser 3 and an evaporator 4. The condenser 3 and the evaporator 4 communicate with one another on the one hand by a duct 5 including a restriction and on the other hand through a mixture circulation 6. The mixture circulation 6 includes an absorber 7 comprising heat draining means 8. The working medium evaporated in the evaporator 4 is supplied through the low pressure vapour duct 9 to the absorber 7, where this vapour is absorbed by the absorbent. During the absorption heat is released. This released heat is conducted away by the heat draining means 8. The mixture of absorbent and vapour absorbed therein is evacuated as a rich mixture from the absorber 7 through the rich mixture channel 13 including a mixture pump 14. The rich mixture thus reaches the generator 12 through said duct 13. The generator 12 comprises heat supply means 10, which supply heat so that the rich mixture desorbs. The vapour thus released is passed through the high pressure vapour duct 11 to the condenser 3. The evaporated poor mixture is fed back to the absorber 7 through a poor mixture duct 15 including a restriction. In the absorber 7 the poor mixture can subsequently again absorb vapour so that the cycle is repeated. The working medium vapour evacuated through the high pressure vapour duct 11 condensates in the condenser 3 whilst giving off heat. The condensated working medium passes through the duct 5 including the restriction again to the evaporator 4, where a new working medium cycle is started.

With regard to the pressure difference between the absorber 7 and the generator 12 it will be obvious that the poor mixture from the generator 12 has first to be cooled before it can absorb working medium vapour. Likewise the temperature of the rich mixture leaving the absorber is too low for desorption when entering the generator 12. Such temperature differences also occur with the low pressure vapour between the evaporator and the absorber, with the high pressure vapour between the generator and the condenser and with the working medium in the liquid state between the condenser and the evaporator. In an embodiment of an absorption heat pump as represented in Fig. 1 all these temperature differences give rise to irreversible losses.

In order to avoid said irreversible losses it is known, as described before, to accommodate at least some of the components of the absorption heat pump in a heat exchanger body in which the components are arranged at positions in the direction of length in accordance with the operational temperatures so that during operation a temperature gradient is established in the direction of length in the body and heat transport mainly takes place transversely of said direction.

A heat pump of this kind designed in accordance with the invention is schematically shown in Fig. 2. Here all components and the communication channels between them are accommodated in one heat exchanger body. The heat pump 21 comprises a condenser 23, an evaporator 24, an absorber 27 and a generator 32. The actuating heat for the mixture circulation is fed into the heat supply means 30. The heat absorbed in the evaporator 24 is supplied through the low temperature heat supply means 39. This low temperature heat supply may include a separate glycol circulation with an external heat exchanger. The heat released in the condenser 23 and the absorber 27 is conducted away by the heat draining means 28. These means may comprise a conventional central heating circulation. The heat supplied to the heat supply means 30, which may also be termed a high temperature heat supply to distinguish it from the low temperature heat supply 39, may originate, for example, from a boiler and be supplied with a fluid, for example, water or oil circulating between said boiler and the high temperature heat supply means 30.

During operation such a temperature gradient is established in the heat pump 21 of Fig. 2 that the top side in Fig. 2 obtains a high temperature and the underside a low temperature. As stated above, the components are arranged in the heat exchanger body at positions corresponding to their operational temperatures. From Fig. 2 it is apparent that in this embodiment of the heat pump 21 the condenser 23 has a lower mean temperature than the absorber 27 and the evaporator 24 has a lower temperature than the condenser 23. The heat drain 28 covers such a height in the heat pump 21 that heat from the condenser 23 as well as heat from the absorber 27 can be absorbed.

In the ideal situation heat transport takes place only in the horizontal direction. At a given level is then prevailing a given mean temperature, whilst in practice the cooling streams will be slightly hotter and the warming streams will be slightly colder. This temperature difference occurring at a given level is due to the fact that the heat capacity flow strengths of the two streams are different, whilst it also applies that a given temperature difference is invariably required to overcome a heat resistance. By a possibly complete heat exchange between all fluid streams maximum efficiency is obtained.

The rich mixture supplied by the pump 34 out of the absorber 27 warms up during its upward movement. Thus the desorption starts at a level at which the equilibrium temperature of the mixture associated with the prevailing pressure occurs. This level determines the beginning of the desorber 32. Dependent on operational conditions desorption may already occur at the level of the absorber 27. Then heat released in the absorber 27 can be directly supplied to the generator 32. In this way a high degree of efficiency of the cycle can be obtained. The part of the channel located below the level where the desorption and hence the generator 32 start operates as a heat exchanger. In the upper part of the generator 32 heat is supplied from the high temperature heat supply means 30. The poor mixture in the poor mixture channel 35 gives off heat, after leaving the generator 32, to the mixture in the generator 32. Likewise, the vapour released in the generator gives off heat to the generator 32 in the high pressure vapour channel 31.

The poor mixture in the poor mixture channel 35 passes through the restriction again to the absorber 27. At the level of the absorber 27 the heat released therein and the heat released by cooling the working medium vapour in the high pressure vapour channel 31 are given off to the rich mixture in the lower part of the channel of the generator 32 and partly to the heat drain 28. The condensation heat released in the condenser 23 and the heat released by cooling the vapour and the condensate are partly given off to the low pressure vapour rising in the low pressure vapour channel 29. The major part of the released heat is absorbed by the heat draining means 28. Below the condenser 23 is arranged a buffer vessel 26 in which the condensate is collected. From the buffer vessel 26 the condensate flows through a duct 25 including a restriction to the evaporator 24. As described above heat is extracted from the low temperature heat supply means 39 during the evaporation of the working medium in the evaporator 24. The heat pump 21 shown schematically in Fig. 2 is represented in a more concrete form in Fig. 3. From Fig. 3
it will be apparent that the heat pump 21 comprises a heat exchanger body 41 having a plurality of plates 42 arranged side
by side in a direction transverse of their surface. The
plates 42 are closed throughout their length. Between the
plates 42 filling elements 43 hold these plates spaced apart.
The filling elements 43 can pass a flow in a vertical direction. The filling elements 43 are not shown in detail here,
but they are preferably designed as described in Dutch patent
application 8301901 of the applicant. The filling elements 43
are made from metal sheet and in heat conducting contact with
the plates 42. Fluid streams passing from bottom to top
through the channels between two plates 42 can thus absorb
heat from adjacent channels passing, for example, downwardly
moving and hence cooling fluid streams.

Apart from the filling elements 43 separating elements
44 are arranged at given places between the plates 42 to
separate comparts from the channels between the plates 42,
said compartments forming a part of one of the components of
the heat pump cycle in accordance with their place in the
heat exchanger body 41. On the side of the plates 42 extending in the direction of length connecting elements are
provided in the form of conencting casings 45 and 46. The
connecting casings 45 and 46 have the shape of a box having
sidewalls 49 and a wall 50 located opposite the edges of the
plates 42. On the sides of the plates the separating elements
44 leave free a plurality of communication openings 52 giving
access to the channels between the plates 42. In the connecting casings 45 and 46 separating walls 52 divide the casings
45, 46 into communication chambers. Through these communication chambers 53 the various compartments of the channels
between the plates 42 communicate with one another.

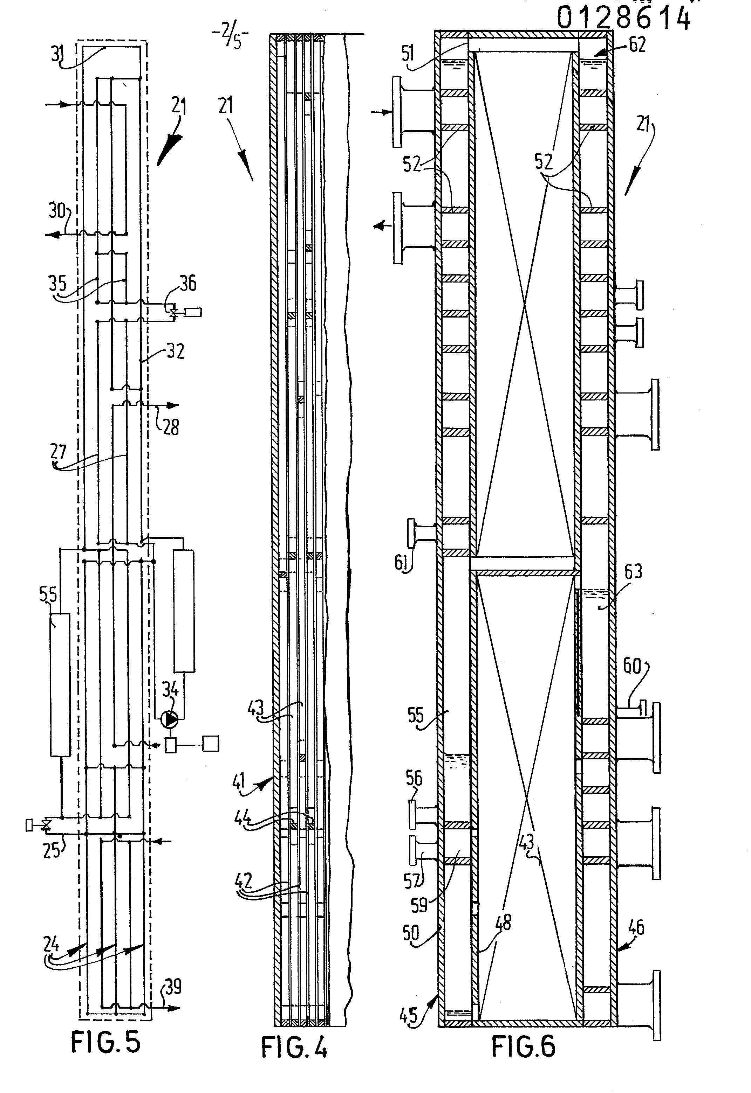

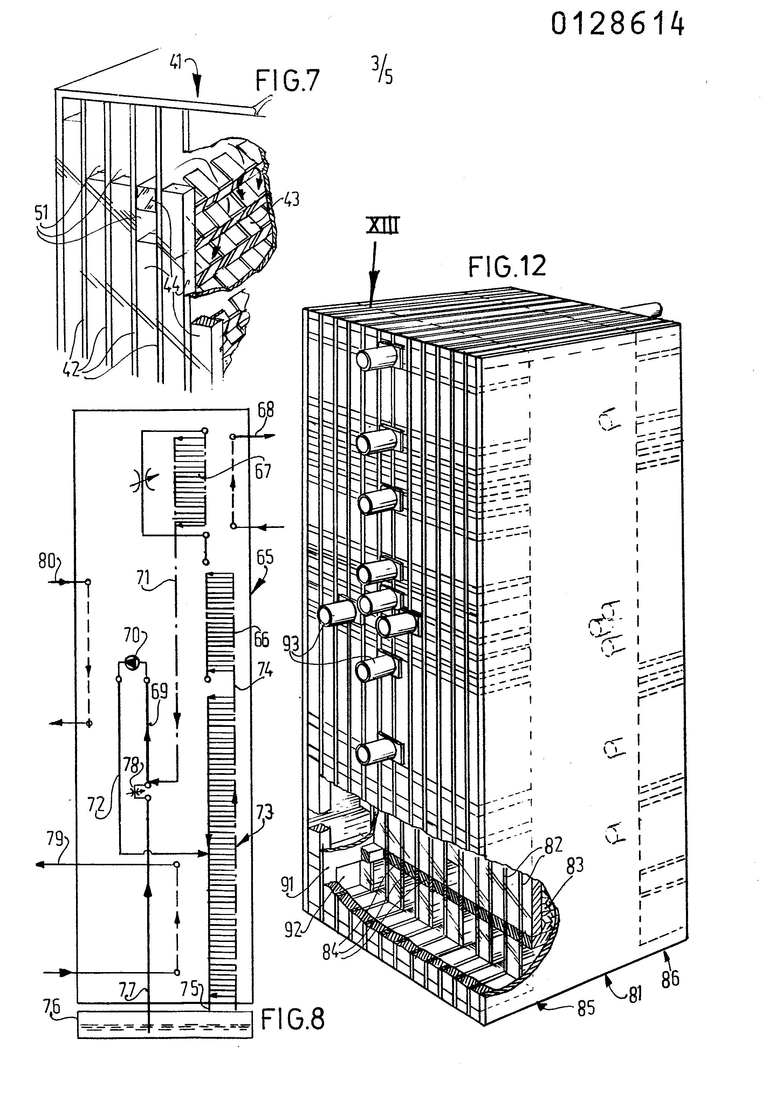

Fig. 4 is an elevational view of the heat exchanger
body 41, the connecting casing 45 being omitted. The Figure
shows the plates 42 and the separating elements 44 between
them. Fig. 7 clearly shows how the horizontal and vertical
separating elements 44 are arranged between the plates 42.
The assembly of plates 42 with separating elements 44 and
filling elements as shown in Fig. 4 comprises all components of a heat pump cycle. In the embodiment shown the entire heat pump schematically shown in Fig. 2 is arranged in total in five channels between plates 42. A number of groups of said five channels are combined to obtain the desired capacity.

Fig. 5 shows schematically the circuitry of the compartments formed by the separating elements 44 in the channels between the plates 42. Five vertical lines are indicated in Fig. 5 representing the corresponding channels between the plates 42. Where a vertical line is interrupted the associated channel has a horizontal separating element 44. The connections between the channels are indicated in Fig. 5 in the same plane. In practice the connections are established through the communication chambers 53 of the connecting casings. Fig. 6 shows the section of the heat pump across the extremely left-hand channel of Fig. 4; the communication chambers in the casings 45, 46 and the connections herewith are clearly shown. A comparison of Figs. 4 and 6 with Fig. 5 shows how the compartments are arranged in the channels between the plates 42.

According to the invention buffer spaces are formed in the connecting casings 45 and 46. These buffer spaces are arranged in the heat pump where during the process cycle fluid is converted into vapour or conversely. The buffer space 55 receives liquid working medium condensed in the condenser. Fig. 5 shows that the buffer space 55 is connected parallel to the condenser. The working medium condensated in the condenser is guided at the lower end of the condenser into the buffer space 55. The top end of the buffer space 55 communicates with the top side of the condenser in order to avoid pressure differences. Between the connections 56 and 57 of the connecting casing 45 is connected the restriction. The condensate of reduced pressure passes through the connection 57 to the communication chamber 59 and from there to the evaporator 24. At the top end of the evaporator 24 the vapour escapes through a communication chamber formed by a buffer vessel 63 towards the absorber 27. The rich mixture leaves the absorber at the lower end and flows towards the buffer space 63 in the connecting casing 46. Through the connection 60 the rich mixture is sucked up by a pump and passed to the connection 61 in the connecting casing 45. Above in the device there is formed a further buffer space 62, where the vapour formed in the generator 32 is separated from the poor mixture. The vapour is passed through the high pressure vapour duct 31 again to the condenser, whereas the poor mixture is fed back to the absorber 27. The function of the further connections is clearly apparent from Fig. 5.

Fig. 8 shows a scheme of a heat pump embodying the invention corresponding to Fig. 2, where rectification of the generator vapour takes place. This is required, for example, in a heat pump using ammonia/water. Whereas in the first described heat pump 21 a low temperature is set below during operation and a high temperature above, a low temperature is obtained above and a high temperature below in the heat pump 65 of Fig. 8. As compared with the heat pump 21 the heat pump 65 is, so to say, toppled over.

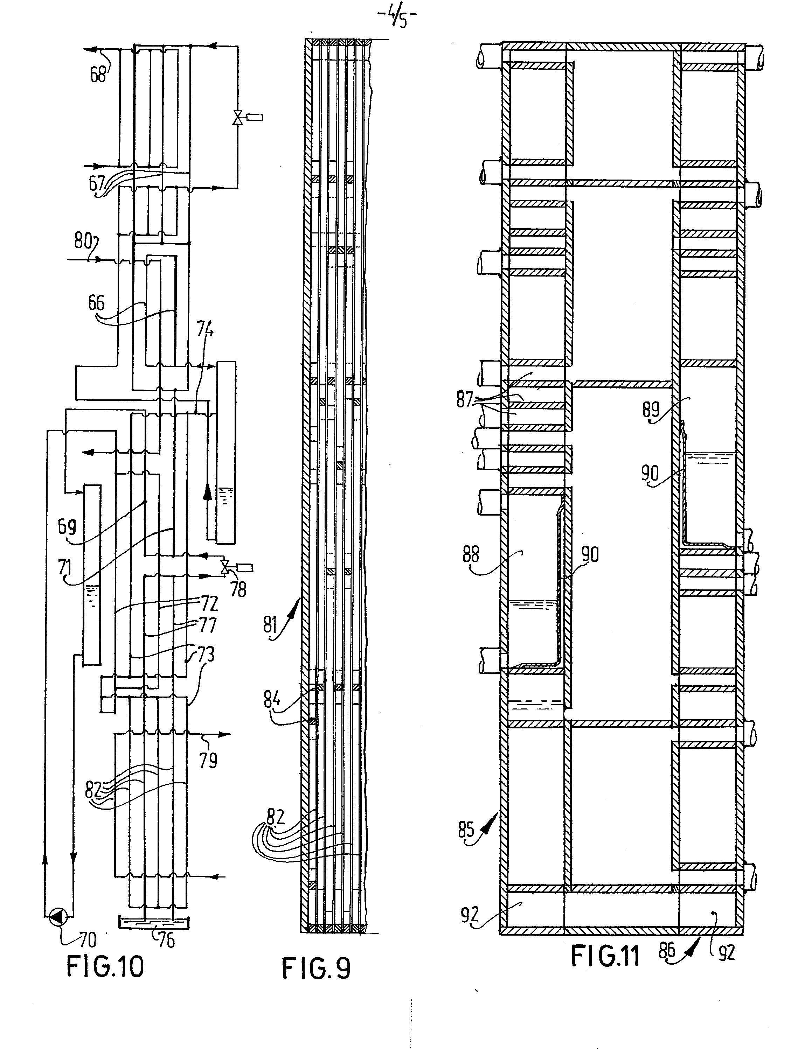

The heat pump 65 comprises a condenser 66 in which the vapour released in the generator/rectificator and supplied through the high pressure vapour channel condensates. The condensate is supplied through a restriction to the evaporator 67, where it evaporates whilst absorbing heat from the low temperature heat supply means 68. The precise course of the ducts between the condenser 66 and the evaporator 67 is not shown in Fig. 8 for the sake of clarity. The course of these ducts is apparent from Fig. 10.

The vapour formed in the evaporator 67 flows through the lower pressure vapour channel 71 towards the absorber 69. The absorber 69 is an absorber of the "Bellen" type. The rich mixture is pumped by a pump 70 into the rich mixture channel 72, which opens out in this embodiment midway the generator/ /rectificator 73. The rich mixture is heated in the rich mixture channel 72. At a low ambient temperature the rich mixture can be passed slightly undercooled to the generator/rectificator. In general evaporation has already started in the channel 72. The vapour is carried along by the rich mixture stream in the rich mixture channel and it escapes upwards in the generator/rectificator 73. The mixture flows downwards in the generator/rectificator and takes up heat so that vapour is released. This vapour is a mixture of working medium vapour and absorbent vapour. During the upward movement this vapour mixture is cooled so that in known manner a rectification process is performed, as a final result of which at least substantially pure working medium vapour flows into the high pressure channel 74. This working medium vapour passes again to the condenser 66 and condensates therein.

The evaporated mixture leaves the generator/rectificator on the lower side through the poor mixture channel 75 and arrives at the buffer 76. From the buffer 76 the poor mixture is passed upwards through the second part of the poor mixture channel 77 and via the restriction 78 it enters the absorber 69. In the absorber 69 the poor mixture absorbs vapour from the low pressure vapour channel 71.

The heat required for the desorption process is supplied by the heat supply means 79. The heat released in the condenser and partly in the absorber is absorbed by the heat draining means 80. Also in this embodiment of the heat pump 65 the temperature is substantially the same at each horizontal level, whilst a temperature increasing from top to bottom is set. The heat exchange between the various fluid streams is at the optimum. Moreover, under given operational conditions the heat released in the absorber 69 can be used for the desorption/rectification with the associated high degree of efficiency.

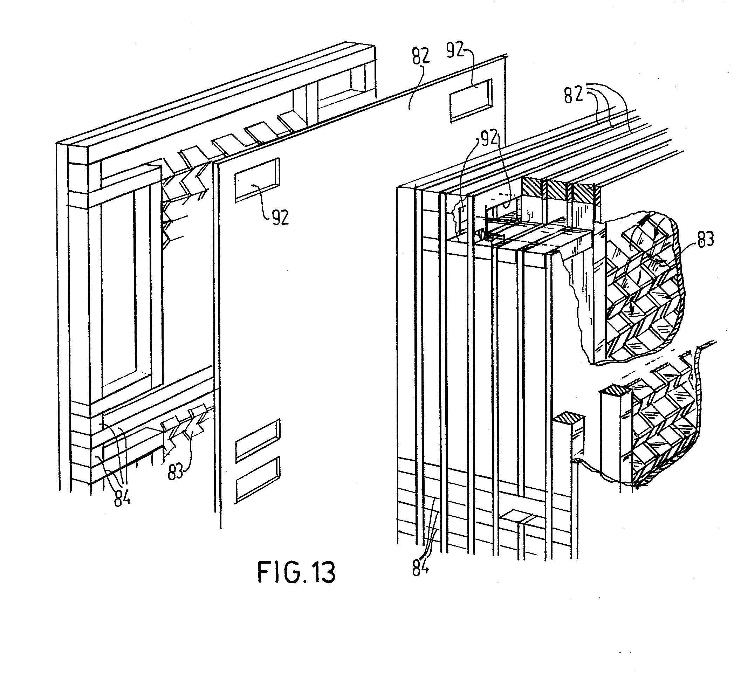

The heat pump process schematically illustrated in Fig. 8 can be carried out in six channels formed between plates 82 as is shown in Figs. 9 to 11. In Fig. 10 these channels are indicated by vertical lines. Where these lines are interrupted separating elements 84 are arranged between the plates 82. Filling elements 83 are again arranged between the plates (see Fig. 13). These filling elements 83 terminate just in front of the separating elements 84 so that transverse channels are formed, which communicate in the manner described above with the communication chambers 87 in the connecting means 85 and 86. The connections between the compartments are designated by the same reference numerals as in Fig. 8. A comparison of Fig. 10 with Fig. 8 shows how the intermediate spaces between the plates 82 are arranged for obtaining a heat pump 65. Dependent on the desired capacity a number of these groups of six plates 82 will again be arranged parallel.

From Figs. 12 and 13 it is apparent that in this embodiment of the heat pump according to the invention the connecting means 85, 86 are formed by parts 91 of the plates 82 projecting out of the heat exchanger body 81. These parts 91 have openings 92 enabling the transverse communications. The end closures and the intermediate separating walls are also formed by separating elements 84. Figs. 12 and 13 clearly show that the rod-shaped separating elements 84 together with the openings 92 and the plate parts 91 form the required communication chambers. On the outer side of the connecting means 85, 86 are mounted connecting members 93 by which external connections can be established. The construction shown in Figs. 12 and 13 enables to manufacture in one run the block of the heat exchanger body 81 and the connecting means 85, 86.

Fig. 11 shows that buffer spaces 88, 89 are formed in the connecting means 85, 86. These buffer spaces 88, 89 are provided with a heat insulation on the underside and on the side facing the plates. The heat insulation 90 is formed by a thin plate forming a vacuum space. The space sealed by the thin plate is exhausted when during mounting the heat exchanger body is soldered in vacuo. The fluid in the buffer spaces 88, 89 has a lower temperature than that prevailing at the same horizontal level in the heat exchanger, since this fluid originates from a higher level. In order to avoid further heat transport in a vertical direction the heat insulation 90 is provided.

In a similar manner the buffer spaces of the heat pump shown in Figs. 4 to 6 have to be provided with heat insulation, since the temperature of the fluid in the buffer spaces is higher than that at the associated level in the heat exchanger.

With the exception of the channels between the plates 82, where vapour bubbles may develop in the downwardly moving fluid stream, all filling elements 83 may advantageously be identical and preferably of the type described in Dutch patent application 8301901 of the applicant. In order to

0128614

ensure that vapour bubbles released in the downward fluid stream are carried along the filling elements 83, through which these fluid streams are moving, have to form a number of separate, closed vertical channels. It is thus avoided that a vapour bubble is formed at an undesirable place, which would block the operation of at least part of the heat pump.

The plates with the filling elements and the separating elements therebetween can be united in a suitable, known manner, for example, by soldering. Moreover, the connecting casings may be integral with the heat exchanger body. As an alternative the assembly of the connecting casings and the plates with the filling elements and separating elements therebetween can be clamped tight by clamping bolts.

From the description of the embodiments it is obvious that the invention can be applied to any desired heat pump cycle. The various components are simply determined by separating elements and filling elements between two closed plates, whereas the connections between the various components transverse thereof are established through connecting means, which may be formed by separate casings.

CLAIMS
------------

1. A sorption heat pump comprising a plurality of components interconnected by fluid channels, for example, an absorber, a generator, a condenser and/or an evaporator, in which at least some components are arranged in a heat exchanger body comprising a packet of plates arranged transversely of their surface side by side, the components being arranged in positions in the direction of length of the plates in accordance with their operational temperatures in the body so that during operation a temperature gradient is set in the direction of length in the body and heat transport mainly takes place transverse of said direction and of the plates c h a r a c t e r i z e d in that at least the parts of the plates located in the heat exchanger body are closed, in that between the plates are arranged filling elements holding the plates spaced apart and passing a flow in the direction of length, and sealed separating elements determining the ends of the components, a number of separating elements having discontinuities at the longitudinal edges of the plates determining communication openings adjoining the components and in that on at least one of the longitudinal sides of the packet of plates determined by the longitudinal edges of the plates connecting means are connected with the communication openings.

2. A sorption heat pump as claimed in Claim 1 c h a r a c t e r i z e d in that the plates, the filling elements, the separating elements and the connecting means are integrally interconnected, for example, by welding or soldering.

3. A sorption heat pump as claimed in Claim 1 or 2 c h a r a c t e r i z e d in that the connecting means are formed by a box-shaped connecting element having sidewalls and a wall opposite the longitudinal side of the packet of plates and the connecting element in communication chambers for associated communication openings, deviding separating walls, there being provided a plurality of external connecting members connected with the communication chambers.

4. A sorption heat pump as claimed in Claim 1 or 2 c h a r a c t e r i z e d in that the connecting means are formed by apertured parts of the plates projecting outside the heat exchanger body and separating walls arranged between said plates, sealing the space between said parts to the outside and dividing it in communication chambers for associated communicating openings, whilst a plurality of external connection members are connected with communication chambers.

5. A sorption heat pump as claimed in Claim 3 or 4 c h a r a c t e r i z e d in that at least one fluid buffer space is formed in the connecting means.

6. A sorption heat pump as claimed in Claim 5 c h a r a c t e r i z e d in that the fluid buffer space is provided at least on the underside and on the side facing the plates with thermal insulation.

7. A sorption heat pump as claimed in anyone of the preceding Claims c h a r a c t e r i z e d in that at least substantially all filling elements have identical shapes.

0128614

-1/5-

FIG.1

FIG.2

FIG.3

0 1 2 8 6 14

FIG. 5

FIG. 4

FIG. 6

FIG.7

FIG.12

FIG.8

FIG.10

FIG.9

FIG.11

FIG.13

European Patent
Office

0128614

Application number

# EUROPEAN SEARCH REPORT

EP 84 20 0770

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | GB-A-2 076 304 (UNIVERSITY OF SYDNEY) *The whole document* | 1-3,5, 7 | F 25 B 29/00 F 28 D 9/00 |
| Y | EP-A-0 058 106 (L'AIR LIQUIDE S.A.) *The whole document* | 1-3,5, 7 | |
| Y | US-A-2 885 195 (HASELDEN) *The whole document* | 1-3,5, 7 | |
| A | DE-A-3 113 063 (DÜRR INNOVATION GmbH) *The whole document* | 1 | |
| A | DE-C- 9 017 (DRACHE) *The whole document* | 3 | TECHNICAL FIELDS SEARCHED (Int. Cl. ³) |
| A | NL-B- 72 447 (DE BOER) *Figures* | 4 | F 25 B F 28 D F 28 F |
| A | FR-A-2 359 385 (BOSCH-SIEMENS HAUSGERÄTE GmbH) | | |
| A | EP-A-0 074 740 (POLLARD et al.) | | |

The present search report has been drawn up for all claims

| Place of search THE HAGUE | Date of completion of the search 04-09-1984 | Examiner SILVIS H. |
|---|---|---|